# EUROPEAN PATENT APPLICATION

(11) **EP 4 749 945 A1**
(43) Date of publication of application: **27.05.2026**
(21) Application number: 23945504.1
(22) Date of filing: 20.07.2023
(51) Int. Cl.: H04B 7/06

(54) **SPATIAL DOMAIN SENDING FILTER MATCHING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN)
(74) Representative: Novagraaf Technologies
(86) International application number: PCT/CN2023/108468
(87) International publication number: WO 2025/015616

(57) **Abstract**

A spatial domain sending filter matching method and apparatus, and a device and a storage medium, which relate to communication technology. The method comprises: a terminal device receiving a plurality of reference signals sent by means of an intelligent reflecting surface, wherein the plurality of reference signals are sent by using respective corresponding downlink spatial domain sending filters (510); and the terminal device sending first information, wherein the first information is used for indicating a first reference signal among the plurality of reference signals (520). The method can realize spatial domain sending filter matching in a communication scenario including an intelligent reflecting surface, thereby improving the network performance and the communication quality.

## Description

### TECHNICAL FIELD

The present disclosure relates to the field of communication technology, and in particular, relates to a method and an apparatus for matching spatial-domain transmission filters, and a device, and a storage medium thereof.

### RELATED ART

After a terminal device enters a connection state, reference signals may be used to perform matching for spatial-domain transmission filters of the terminal device for data transmission and spatial-domain transmission filters of the network device.

An intelligent reflecting surface may intelligently reconfigure a wireless propagation environment to improve the performance of a wireless communication network. However, the current wireless communication network does not support performing matching for the spatial-domain transmission filters between the terminal device and the intelligent reflecting surface when using the intelligent reflecting surface.

### SUMMARY

Embodiments of the present disclosure provide a method and an apparatus for matching spatial-domain transmission filters, and a device, and a storage medium thereof. The technical solutions are as follows:
According to an aspect of the embodiments of the present disclosure, a method for matching spatial-domain transmission filters is provided. The method is performed by a terminal device, and includes:
receiving a plurality of reference signals from an intelligent reflecting surface, wherein the plurality of reference signals are reflected using respective corresponding downlink spatial-domain transmission filters; and
transmitting first information, wherein the first information is used to indicate a first reference signal of the plurality of reference signals.

According to an aspect of the embodiments of the present disclosure, a method for matching spatial-domain transmission filters is provided. The method is performed by an intelligent reflecting surface, and includes:
reflecting a plurality of reference signals to a terminal device, wherein the plurality of reference signals are reflected using respective corresponding downlink spatial-domain transmission filters;
determining a first downlink spatial-domain transmission filter adapted to the terminal device based on a first reference signal fed back by the terminal device, wherein the first downlink spatial-domain transmission filter is the downlink spatial-domain transmission filter corresponding to the first reference signal.

According to an aspect of the embodiments of the present disclosure, a method for matching spatial-domain transmission filters is provided. The method is performed by a network device, and includes:
transmitting third indication information, wherein the third indication information is used to instruct an intelligent reflecting surface to reflect a plurality of reference signals; and the plurality of reference signals are reflected using respective corresponding downlink spatial-domain transmission filters.

According to an aspect of the embodiments of the present disclosure, an apparatus for matching spatial-domain transmission filters is provided. The apparatus is arranged in a terminal device, and includes:
a transceiver module, configured to receive a plurality of reference signals from an intelligent reflecting surface, wherein the plurality of reference signals are transmitted using respective corresponding downlink spatial-domain transmission filters;
wherein the transceiver module is further configured to transmit first information, wherein the first information is used to indicate a first reference signal of the plurality of reference signals.

According to an aspect of the embodiments of the present disclosure, an apparatus for matching spatial-domain transmission filters is provided. The apparatus is arranged in an intelligent reflecting surface, and includes:
a transceiver module, configured to reflect a plurality of reference signals to a terminal device, wherein the plurality of reference signals are reflected using respective corresponding downlink spatial-domain transmission filters;
wherein the transceiver module is further configured to determine a first downlink spatial-domain transmission filter adapted to the terminal device based on a first reference signal fed back by the terminal device, wherein the first downlink spatial-domain transmission filter is the downlink spatial-domain transmission filter corresponding to the first reference signal.

According to an aspect of the embodiments of the present disclosure, an apparatus for matching spatial-domain transmission filters is provided. The apparatus is arranged in a terminal device, and includes:
a transceiver module, configured to transmit third indication information, wherein the third indication information is used to instruct the intelligent reflecting surface to reflect the plurality of reference signals; and the plurality of reference signals are reflected using respective corresponding downlink spatial-domain transmission filters.

According to an aspect of the embodiments of the present disclosure, a communication device is provided. The communication device includes: a processor and a memory storing one or more executable instructions; wherein the processor executes the one or more executable instructions, is caused to perform the method for matching spatial-domain transmission filters in the above aspect. In some embodiments, the communication device is a terminal device, or the communication device is an intelligent reflecting surface, or the communication device is a network device.

According to an aspect of the embodiments of the present disclosure, a computer-readable storage medium is provided. The computer-readable storage medium stores one or more executable instructions. The one or more executable instructions, when loaded and executed by a processor, cause the processor to perform the method for matching spatial-domain transmission filters in the above aspect.

According to an aspect of the embodiments of the present disclosure, a chip is provided. The chip includes: programmable logical circuitry or one or more programs. The chip, when running, causes the chip to perform the method for matching spatial-domain transmission filters in the above aspect.

According to an aspect of the embodiments of the present disclosure, a computer program product is provided. The computer program product includes: one or more computer instructions stored in a computer-readable storage medium. The one or more computer instructions, when loaded and executed by a processor, cause the processor to perform the method for matching spatial-domain transmission filters in the above aspect.

The technical solutions according to the embodiments of the present disclosure achieve at least one of the following beneficial effects:
After receiving a plurality of reference signals from an intelligent reflecting surface using spatial-domain transmission filters, the terminal device reports a first reference signal of the plurality of reference signals. Since the plurality of reference signals are reflected by the intelligent reflecting surface using respective corresponding downlink spatial-domain transmission filters, a correspondence is present between the downlink spatial-domain transmission filter of the intelligent reflecting surface and the reference signal. By reporting the first reference signal of the plurality of reference signals, the intelligent reflecting surface knows a suitable downlink spatial-domain transmission filter for the terminal device. The method realizes matching the spatial-domain transmission filters in a communication scenario involving the intelligent reflecting surface to enhance network performance and communication quality.

### BRIEF DESCRIPTION OF THE DRAWINGS

FIG. 1 is an architecture diagram of a communication network according to some embodiments of the present disclosure;
FIG. 2 is a schematic diagram of an intelligent reflection surface forwarding message according to some embodiments of the present disclosure;
FIG. 3 is a schematic diagram of selecting an optimal downlink spatial-domain transmission filter according to some embodiments of the present disclosure;
FIG. 4 is a schematic diagram of matching uplink spatial-domain transmission filters and downlink spatial-domain transmission filters according to some embodiments of the present disclosure;
FIG. 5 is a flowchart of a method of a terminal device for matching spatial-domain transmission filters according to some embodiments of the present disclosure;
FIG. 6 is a flowchart of a method of an intelligent reflecting surface for matching spatial-domain transmission filters according to some embodiments of the present disclosure;
FIG. 7 is a flowchart of a method of a network device for matching spatial-domain transmission filters according to some embodiments of the present disclosure;
FIG. 8 is a schematic diagram of a network device transmits a message to an intelligent reflecting surface according to some embodiments of the present disclosure;
FIG. 9 is a schematic diagram of an apparatus for matching spatial-domain transmission filters according to some embodiments of the present disclosure;
FIG. 10 is a schematic diagram of an apparatus for matching spatial-domain transmission filters according to some embodiments of the present disclosure;
FIG. 11 is a schematic diagram of an apparatus for matching spatial-domain transmission filters according to some embodiments of the present disclosure; and
FIG. 12 is a schematic structural diagram of a communication device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The network architecture and service scenarios described in the embodiments of the present disclosure are provided to more clearly illustrate the technical solutions of the embodiments, and do not constitute limitations on the technical solutions offered by these embodiments. As recognized by those skilled in the art, with the evolution of network architectures and emergence of new service scenarios, the technical solutions provided herein remain applicable to similar technical challenges. The terminology used in the present disclosure is employed solely for describing specific embodiments and does not purport to restrict the scope of the present disclosure.

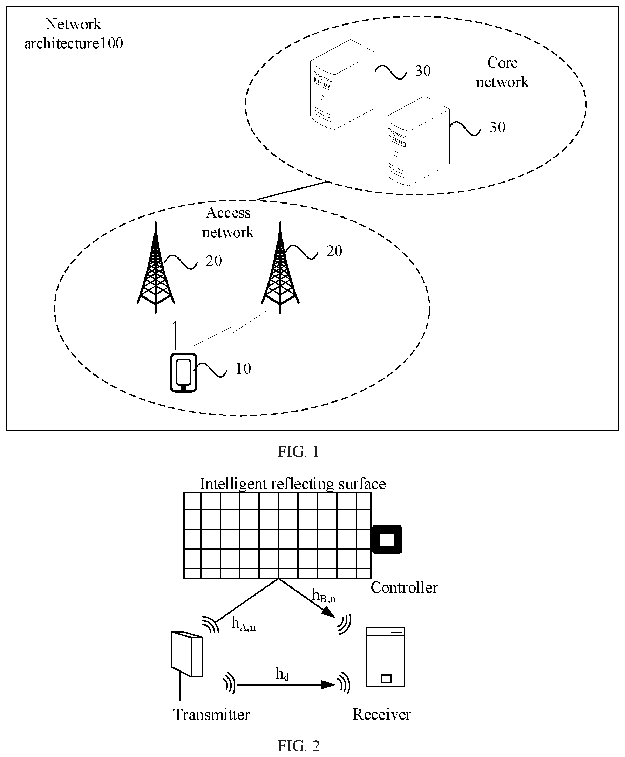

FIG. 1 is a schematic diagram of a network architecture 100 according to some embodiments of the present disclosure. The network architecture 100 may involve a terminal device 10, an access network device 20, and a core network element 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. A terminal device may also be referred to simply as a terminal or UE, and those skilled in the art shall understand its meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network element 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN. In the embodiments of the present disclosure, unless otherwise specified, the term "network device" is the access network device 20, e.g., a base station.

The core network element 30 is an element deployed in a core network. The core network element 30 mainly functions to provide a user connection, user management and service bearing, and to provide an interface to an external network as a bearer network. For example, core network elements in the 5G NR system may include elements such as an access and mobility management function (AMF) entity, a user plane function (UPF) entity, and a session management function (SMF) entity.

In some embodiments, the access network device 20 communicates with the core network element 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system (e.g., Beyond 5G (B5G) System, 6th Generation System), a narrowband Internet of things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions provided in the present disclosure, some relevant technical knowledge involved in the present disclosure is described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

### (1) Intelligent reflecting surface (IRS)

An IRS is an entirely revolutionary technology. With a large number of low-cost passive reflective elements integrated on a plane, the IRS may intelligently reconfigure the wireless propagation environment, thereby significantly enhancing the performance of wireless communication networks. Specifically, different elements of the IRS may independently reflect incident signals by controlling their amplitude and/or phase, thereby collaboratively achieving refined three-dimensional (3D) passive beamforming for directional signal enhancement or nulling. In one scenario, when the IRS reflects an incident signal, it means that the IRS transparently forwards the incident signal without performing any processing on the incident signal. In another scenario, the reflection of the incident signal by the IRS involves the IRS processing the incident signal first and then forwarding the processed signal. The processing of the incident signal by the IRS may include reading, parsing, writing, and other operations on the signal. Additionally, the IRS may adjust the direction of the reflected signal by controlling the amplitude and/or phase of different elements, so as to achieve the goal of reflecting signals in different directions, which is not limited to specular reflection. The IRS may also forward the incident signal in the form of a beam. Even in a case where the incident signal is not transmitted to the IRS in the form of a beam, the IRS may still forward the incident signal in the form of a beam.

Compared to the conventional transmitter/receiver wireless link adaptation technologies, the IRS actively modifies the wireless channel between a transmitter and a receiver via highly controllable and intelligent signal reflection. This provides a new degree of freedom for further improving the performance of wireless links and paves the way for the realization of an intelligently programmable wireless environment. By appropriately adjusting the 3D passive beamforming, the signal reflected by the IRS may be constructively added to signals from other paths to enhance the desired signal power at the receiver, or destructively cancel out unwanted signals such as co-channel interference. Since the IRS eliminates the use of transmit radio frequency (RF) chains and only operates over short distances, the IRS may be densely deployed with scalable costs and low energy consumption, without the need for complex interference management between passive IRSs.

As illustrated in FIG. 2, in the absence of the IRS, a beam hd transmitted by the transmitter is directly received by the receiver; in the presence of the IRS, a beam hA,n transmitted by the transmitter is reflected by the IRS into a beam hB,n, and the receiver receives the beam hB,n reflected by the IRS. In some cases, for example, in a building scenario where the transmitter is installed on the roof and the receiver is located on a floor of the building, without the IRS, in a case where the transmitter transmits signals directly to the receiver, the signals are easily affected by obstacles such as walls, resulting in poor signal quality received by the receiver. However, in a case where the IRS is installed on the wall of an adjacent building to forward the signals transmitted by the transmitter, the number of obstacles in the signal propagation path may be effectively reduced, ensuring high-quality signals received by the receiver. The IRS eliminates the need of transmit RF chains. Since the IRS only operates over short distances, dense deployment may be adopted to improve the signal coverage of the transmitter. In a case where the distance between the transmitter and the receiver is long, the beam transmitted by the transmitter may be forwarded via a plurality of IRSs, and the transmitter does not need to perform complex interference management on the IRSs. In a case where the distance between the transmitter and the receiver is long, the transmitter needs to manage the beams transmitted via the transmit RF chains, for example, determining the transmission power of the beams, to ensure the signal quality of the beams received by the receiver.

### (2) Beam matching

Beam matching is the process of selecting an optimal pair of beams for communication between different communication devices.

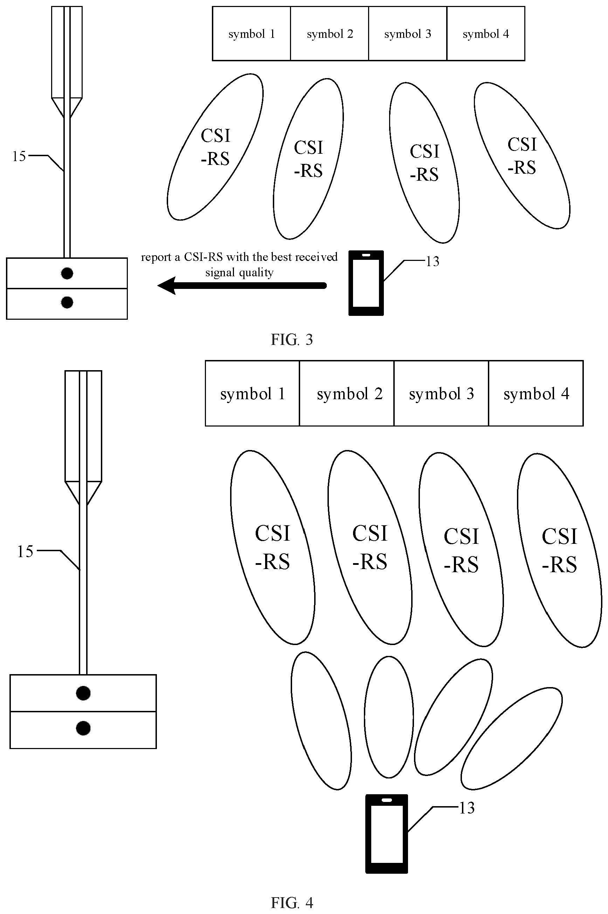

The following is an example of beam matching for a network device and a terminal device:
As illustrated in FIG. 3, a network device 15 transmits a channel state information-reference signal (CSI-RS) in different directions at different time-domain locations (symbol 1, symbol 2, symbol 3, symbol 4). These symbols may be orthogonal frequency-division multiplexing (OFDM). Upon receiving the corresponding CSI-RS measurement configuration, a terminal device 13 may perform measurements on CSI-RS signals from different directions. The terminal device 13 reports a beam with an optimal measured signal quality to the network device 15 to enable the network device 15 to know both an optimal CSI-RS and corresponding beam forming spatial transmission parameter of the optimal CSI-RS for the terminal device 13.

To further perform uplink beam matching, upon completion of the above downlink beam matching process, as illustrated in FIG. 4, the network device 15 may reconfigure a plurality of CSI-RSs with the same direction as the above reported CSI-RS for the terminal device 13. Furthermore, the terminal device 13 may switch a receive beam applied by the terminal device 13 when the terminal device 13 performs measurement to select an appropriate uplink beam.

The network architecture and service scenarios described in the embodiments of the present disclosure are provided to more clearly illustrate the technical solutions of the embodiments, and do not constitute limitations on the technical solutions offered by these embodiments. As recognized by those skilled in the art, with the evolution of network architectures and emergence of new service scenarios, the technical solutions provided herein remain applicable to similar technical challenges.

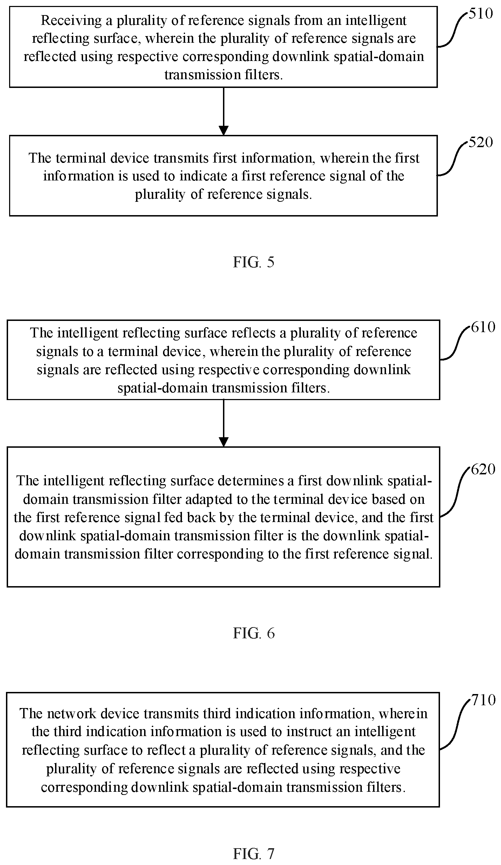

FIG.5 illustrates a flowchart of a method for matching spatial-domain transmission filters according to an embodiment of the present disclosure. Each step of the method is performed by a terminal device. The method may include at least one of steps 510 to 520.

In 510, a terminal device receives a plurality of reference signals from an IRS, wherein the plurality of reference signals are reflected using respective corresponding downlink spatial-domain transmission filters.

It should be noted that in the present disclosure, the "spatial-domain transmission filter" mentioned is also referred to as a "beam," and the "spatial-domain transmission filter" and the "beam" have same meaning. In some embodiments, the "spatial-domain transmission filter" may also be referred to as a "spatial-domain transmitter filter," a "spatial transmit filter," a "spatial transmission filter," or the like. Those skilled in the art may understand the meaning. In addition, unless otherwise specified, the "spatial-domain transmission filter" is referred to as a "transmit beam." The "spatial-domain transmission filter" may also be referred to as a "transmitter spatial-domain filter," a "spatial-domain filter for transmission," or the like. The present disclosure does not impose limitations on these designations. Similarly, the "spatial-domain receive filter" is also referred to as a "receive beam," a "spatial-domain reception filter," a "receiver spatial-domain filter," a "spatial-domain transmission filter for reception," or the like. The present disclosure does not impose limitation on these designations.

In some embodiments, the IRS reflects the plurality of reference signals to the terminal device, and the terminal device receives the plurality of reference signals from the IRS.

In some embodiments, the reference signal refers to CSI-RS, and different CSI-RSs use the downlink spatial-domain transmission filters to reflect.

In some embodiments, the terminal device receives first indication information, wherein the first indication information is used to instruct the IRS to reflect the plurality of reference signals. In some embodiments, the terminal device receives first indication information, wherein the first indication information is used to instruct the IRS to reflect the plurality of reference signals in a non-repeating form. The non-repeating form refers to the fact that the plurality of reference signals are not transmitted repeatedly in any specific direction. The IRS adopts the downlink spatial-domain transmission filters to reflect the plurality of reference signals respectively. For example, the IRS reflects the plurality of reference signals at different time-domain positions using the downlink spatial-domain transmission filters.

In some embodiments, a network device transmits the first indication information to the terminal device.

In some embodiments, the first indication information includes a plurality of time-frequency positions corresponding to the plurality of reference signals, such that the terminal device may measure the plurality of reference signals based on the first indication information.

In some embodiments, the reference signal is non-zero power channel state information-reference signal (NZP CSI-RS). Accordingly, the first indication information may be non-zero power channel state information-reference signal-resource set (NZP CSI-RS-ResourceSet).

In 520, the terminal device transmits first information, wherein the first information is used to indicate a first reference signal of the plurality of reference signals.

In some embodiments, the first reference signal is a reference signal with an optimal measured received signal quality of the plurality of reference signals acquired by the terminal device.

The method for the terminal device to perform downlink signal measurement and the metrics used by the terminal device to evaluate the signal quality of downlink spatial-domain transmission filter, The present disclosure does not impose limitations. For example, the terminal device may use metrics such as a signal-to-noise ratio (SNR); a signal-to-interference-plus-noise ratio (SINR); a reference signal received quality (RSRQ); a signal energy, a reference signal received power (RSRP); or a received signal strength indicator (RSSI) to evaluate the signal quality of the downlink spatial-domain transmission filters.

In some embodiments, each of the plurality of reference signals is associated with unique identification information. The identification information is used to distinguish between the plurality of reference signals. In some embodiments, different CSI-RSs may be associated with different CSI-RS IDs.

In some embodiments, the first information includes identification information of the first reference signal. In some embodiments, in a case where the first reference signal is a CSI-RS, the first information includes ID information of the CSI-RS.

In some embodiments, the terminal device transmits the first information to the network device, or the terminal device transmits the first information to the IRS.

In some embodiments, the terminal device transmits the first information to the network device, and the network device then transmits the first information to the IRS.

In some embodiments, the terminal device receives second indication information, wherein the second indication information is used to instruct the IRS to reflect a first reference signal spatial-domain transmission filter. In some embodiments, the terminal device receives the second indication information, wherein the second indication information is used to instruct the IRS to reflect a first reference signal in a repeating form. The repeating form refers to the fact that a reference signal is reflected repeatedly. The IRS repeatedly reflects the first reference signal using a first downlink spatial-domain transmission filter. For example, the IRS adopts the first downlink spatial-domain transmission filter to repeatedly reflect the first reference signal at different time-domain locations.

In some embodiments, the network device transmits the second indication information to the terminal device.

In some embodiments, the second indication information includes a time-frequency-domain position corresponding to the first reference signal, such that the terminal device matches the downlink spatial-domain transmission filter corresponding to the first reference signal based on the second indication information.

In some embodiments, the terminal device receives the first reference signal from the first downlink spatial-domain transmission filter and determines a first uplink spatial-domain transmission filter matching the first downlink spatial-domain transmission filter. The first downlink spatial-domain transmission filter is the downlink spatial-domain transmission filter corresponding to the first reference signal.

In some embodiments, the terminal device may select the first uplink spatial-domain transmission filter by adjusting the spatial-domain reception filter applied by the terminal device.

In some embodiments, in a case where the terminal device receives the optimal measured received signal using a specific spatial-domain transmission filter to receive the first reference signal, the terminal device selects the spatial-domain reception filter as the first uplink spatial-domain transmission filter.

In some embodiments, a correspondence between the downlink spatial-domain transmission filter and the reference signal is determined by the network device and indicated to the IRS.

In some embodiments, the correspondence between the downlink spatial-domain transmission filter and the reference signal is determined by the IRS.

In some embodiments, the number of downlink spatial-domain transmission filters and/or the number of reference signals are configured by the network device, or are configured by the IRS, or are preconfigured.

The technical solutions according to the embodiments of the present disclosure, after receiving a plurality of reference signals from an IRS using spatial-domain transmission filters, the terminal device reports a first reference signal of the plurality of reference signals. Since the plurality of reference signals are reflected by the IRS using different downlink spatial-domain transmission filters, a correspondence is present between the downlink spatial-domain transmission filter of the IRS and the reference signal. With the first reference signal of the plurality of reference signals being reported, the IRS knows a suitable downlink spatial-domain transmission filter for the terminal device. The method realizes matching the spatial-domain transmission filters in a communication scenario involving the IRS to enhance network performance and communication quality.

FIG.6 illustrates a flowchart of a method for matching spatial-domain transmission filters according to an embodiment of the present disclosure. Each step of the method is performed by an IRS. The method may include at least one of steps 610 to 620.

In 610, the IRS reflects a plurality of reference signals to a terminal device, wherein the plurality of reference signals are reflected using respective corresponding downlink spatial-domain transmission filters.

In some embodiments, the IRS reflects the plurality of reference signals to the terminal device using different downlink spatial-domain transmission filters.

In some embodiments, the IRS reflects different CSI-RSs to the terminal device using different downlink spatial-domain transmission filters.

In some embodiments, the IRS reflects the CSI-RSs with different IDs and different directions to the terminal device at different time-domain locations.

In some embodiments, the network device transmits the reference signal to the IRS. Upon the IRS receives the reference signal, the IRS processes the reference signal to reflect the plurality of reference signals. For example, when the network device transmits a CSI-RS to the IRS, the IRS reflects the CSI-RS into a plurality of different CSI-RSs in different directions.

In some embodiments, the IRS receives third indication information, wherein the third indication information is used to instruct the IRS reflect the plurality of reference signals using the corresponding downlink spatial-domain transmission filters of the IRS.

In some embodiments, the third indication information is used to instruct the IRS to reflect the plurality of reference signals in the form of a non-repeating spatial-domain transmission filter.

The third indication information may be the same as or different from the first indication information in the embodiments above, and the present disclosure does not impose the limitation.

In some embodiments, the network device transmits the third indication information to the IRS.

In some embodiments, the IRS reflects the plurality of reference signals to the terminal device based on the third indication information using the different downlink spatial-domain transmission filters.

In some embodiments, the third indication information includes time-frequency-domain positions corresponding to the plurality of reference signals.

In some embodiments, the IRS reflects the plurality of reference signals to the terminal device at different time-domain locations based on the third indication information using the different downlink spatial-domain transmission filters.

In some embodiments, after the IRS determines a correspondence between the downlink spatial-domain transmission filter and the reference signal, the IRS does not need to receive the third indication information. The IRS autonomously reflects the plurality of reference signals to the terminal device using the respective downlink spatial-domain transmission filters.

In some embodiments, the correspondence between the downlink spatial-domain transmission filter and the reference signal is determined by the network device. Before the IRS reflects the plurality of reference signals to the terminal device using the downlink spatial-domain transmission filters, the IRS needs to receive the second information from the network device, wherein the second information is used to indicate the correspondence between the downlink spatial-domain transmission filters and the reference signals.

In some embodiments, after the IRS receives the second information from the network device, the IRS transmits the plurality of reference signals to the terminal device using the downlink spatial-domain transmission filters.

In some embodiments, a correspondence between the downlink spatial-domain transmission filter and the reference signal is determined by the network device.

In some embodiments, in a case where the correspondence between the downlink spatial-domain transmission filter and the reference signal is configured by the IRS, the IRS reflects the plurality of reference signals to the terminal device using the respective corresponding downlink spatial-domain transmission filters.

In some embodiments, the number of downlink spatial-domain transmission filters and/or the number of reference signals are configured by the network device, or are configured by the IRS, or are preconfigured.

In some embodiments, the IRS receives first information from the terminal device, wherein the first information is used to indicate the first reference signal.

In some embodiments, each of the plurality of reference signals is associated with unique identification information, and the first information includes identification information of the first reference signal.

In some embodiments, the different identification information of the plurality of reference signals are configured by the IRS.

In 620, the IRS determines a first downlink spatial-domain transmission filter adapted to the terminal device based on the first reference signal fed back by the terminal device, and the first downlink spatial-domain transmission filter is the downlink spatial-domain transmission filter corresponding to the first reference signal.

In some embodiments, the first reference signal is a reference signal with an optimal measured reception signal quality of the plurality of reference signals acquired by the terminal device.

In some embodiments, the IRS reflects the first reference signal to the terminal device using the first downlink spatial-domain transmission filter, such that the terminal device determines a first uplink spatial-domain transmission filter matching the first downlink spatial-domain transmission filter.

In some embodiments, the first reference signal is a CSI-RS, and the IRS reflects a plurality of repeated CSI-RSs to the terminal device in different time-domain locations using the first downlink spatial-domain transmission filter.

In some embodiments, the IRS receives fourth indication information, and the fourth indication information is used to instruct the IRS to reflect the first reference signal using the first downlink spatial-domain transmission filter.

In some embodiments, the fourth indication information is used to instruct the IRS to reflect the first reference signal spatial-domain transmission filter in the form of a repeating spatial-domain transmission filter.

The fourth indication information may be the same as or different from the second indication information in the embodiments above, and the present disclosure does not impose limitation.

In some embodiments, the network device transmits the fourth indication information to the IRS.

In some embodiments, the IRS reflects the first reference signal to the terminal device using the first downlink spatial-domain transmission filter based on the fourth indication information.

In some embodiments, the fourth indication information may include a time-frequency-domain position corresponding to the first reference signal.

In some embodiments, the IRS reflects the first reference signal to the terminal device using the first downlink spatial-domain transmission filter in a different time-domain position based on the fourth indication information.

In some embodiments, in a case where the IRS determines the first reference signal, the IRS does not need to receive the fourth indication information. The IRS autonomously reflects the first reference signal to the terminal device using the first downlink spatial-domain transmission filter.

In some embodiments, in a case where the IRS receives the first information, the IRS reflects the first reference signal to the terminal device using the first downlink spatial-domain transmission filter.

In the method, the IRS reflects a plurality of reference signals to a terminal device using different downlink spatial-domain transmission filters, and the IRS determines a first downlink spatial-domain transmission filter adapted to the terminal device based on the first reference signal fed back by the terminal device. The method may realize matching the spatial-domain transmission filter in a communication scenario involving the IRS to enhance network performance and communication quality.

FIG.7 illustrates a flowchart of a method for matching spatial-domain transmission filters according to an embodiment of the present disclosure. Each step of the method is performed by a network device. The method may include step 710.

In 710, the network device transmits third indication information, wherein the third indication information is used to instruct an IRS to reflect a plurality of reference signals, and the plurality of reference signals are reflected using respective corresponding downlink spatial-domain transmission filters.

In some embodiments, the network device transmits the third indication information to the IRS.

In some embodiments, the network device transmits first indication information, and the first indication information is used to instruct the IRS to reflect the plurality of reference signals. In some embodiments, the network device transmits the first indication information, the first indication information is used to instruct the IRS to reflect the plurality of reference signals in the form of a non-repeating spatial-domain transmission filter.

In some embodiments, the network device receives first information, and the first information is used to indicate a first reference signal of the plurality of reference signals.

In some embodiments, the network device transmits the first information to the IRS after receiving the first information from a terminal device.

In some embodiments, the network device transmits fourth indication information, and the fourth indication information is used to instruct the IRS to reflect the first reference signal using a first downlink spatial-domain transmission filter, and the first downlink spatial-domain transmission filter is the downlink spatial-domain transmission filter corresponding to the first reference signal.

In some embodiments, the network device transmits second indication information, and the second indication information is used to instruct the IRS to reflect a first reference signal spatial-domain transmission filter. In some embodiments, the network device transmits the second indication information, and the second indication information is used to instruct the IRS to reflect the first reference signal spatial-domain transmission filter in the form of a repeating spatial-domain transmission filter.

In some embodiments, the first reference signal is a reference signal with an optimal measured received signal quality of the plurality of reference signals acquired by the terminal device.

In some embodiments, a correspondence between the downlink spatial-domain transmission filter and the reference signal is determined by the network device. The network transmits second information, and the second information is used to indicate the correspondence between the downlink spatial-domain transmission filter and the reference signal.

In some embodiments, the number of downlink spatial-domain transmission filters and/or the number of reference signals are configured by the network device, or are configured by the IRS, or are preconfigured.

In some embodiments, different identification information of the plurality of reference signals are configured by the network device.

In some embodiments, the network device configures the identification information based on the number of downlink spatial-domain transmission filters and/or the number of reference signals, and the network device informs the identification information corresponding to each reference signal to the IRS.

In some embodiments, the network device informs each downlink spatial-domain transmission filter bound with CSI-RS ID information of the IRS based on the number of CSI-RSs of the IRS.

In some embodiments, the network device is an access network device or a core network element.

The above method is indicated by a network device to an IRS to reflect a plurality of reference signals using different downlink spatial-domain transmission filters. This method may realize matching a spatial-domain transmission filter in a communication scenario involving the IRS to enhance network performance and communication quality.

The following describes an exemplary embodiment of a method for matching spatial-domain transmission filters provided by this disclosure. This solution only includes one or several parallel schemes involved in this disclosure. For more parallel schemes, reference may be made to other embodiments of this disclosure. The method includes at least one of the following steps:
1) An IRS configures the number of downlink spatial-domain transmission filters and/or the number of reference signals. The IRS indicates the number of downlink spatial-domain transmission filters and/or the number of reference signals to the network device.
2) the network device determines a correspondence between the downlink spatial-domain transmission filter and the reference signal based on the number of downlink spatial-domain transmission filters and/or the number of reference signals indicated by the IRS. The network device transmits second information to the IRS.
3) The network device transmits third indication information to the IRS and transmits first indication information to a terminal device.
4) The IRS reflects a plurality of reference signals to the terminal device using different downlink spatial-domain transmission filters based on the third indication information.
5) The terminal device measures the plurality of reference signals based on the first indication information. The terminal device obtains a reference signal with an optimal measured received signal quality of the plurality of reference signals, namely the first reference signal.
6) The terminal device transmits first information to the IRS or the network device. Or, after the terminal device transmits the first information to the network device, the network device transmits the first information to the IRS.
7) The network device transmits fourth indication information to the IRS and transmits second indication information to the terminal device.
8) The IRS reflects the first reference signal using a first downlink spatial-domain transmission filter based on the fourth indication information
9) The terminal device receives the first reference signal with different spatial-domain reception filters based on the second indication information, and finally the terminal device determines a first uplink spatial-domain transmission filter matching the first downlink spatial-domain transmission filter.

Next, a supplementary description is given to determine the correspondence between the downlink spatial-domain transmission filter and the reference signal in the embodiments of the present disclosure. The following embodiments may be combined with the remaining embodiments of this disclosure to form a complete solution.

The correspondence is determined by a network device.
1) The correspondence is determined by an access network device.

In some embodiments, the number of downlink spatial-domain transmission filters in an IRS are configured by the network device, or are configured by the IRS, or are preconfigured. The preconfigured may be implemented by the IRS based on implementation of the IRS. The preconfigured may be configured by the network device. Alternatively, the preconfigured may be predefined by a protocol. The present disclosure does not impose limitations on preconfigured.

In some embodiments, the number of downlink spatial-domain transmission filters and/or the number of reference signals are configured by the access network device. In other words, the access network device configures not only the correspondence, but also the number of downlink spatial-domain transmission filters and/or the number of reference signals.

In some embodiments, the number of downlink spatial-domain transmission filters and/or the number of reference signals are configured by a core network element. In this case, before the access network device configures the correspondence, the core network element indicates the number of downlink spatial-domain transmission filters and/or the number of reference signals to the access network device.

In some embodiments, the number of downlink spatial-domain transmission filters and/or the number of reference signals are configured by the IRS. In this case, before the access network device configures the correspondence, the IRS indicates the number of downlink spatial-domain transmission filters and/or the number of reference signals to the access network device. For example, the IRS instructs the access network device the number of CSI-RSs configured for unicast transmission.

When the correspondence is determined by the access network device, the access network device transmits second information upon completion of the configuration of the correspondence. Correspondingly, the IRS and/or a terminal device receive the second information.

In some embodiments, the access network device transmits the second information to both the IRS and the terminal device. For example, the access network device may directly transmit the second information to the IRS. For example, the access network device may directly transmit the second information to the terminal device. For example, the access network device transmits the second information to the terminal device via the intelligent reflection surface.

In some embodiments, the access network device transmits the second information to the terminal device via the intelligent reflection surface. The IRS obtains the correspondence between the downlink spatial-domain transmission filter and the reference signal based on the second information.

In some embodiments, the access network device transmits the second information to the terminal device via broadcast.

2) The correspondence is determined by the core network element.

In the case of 5G communication systems, the above core network element may be an AMF or other core network element. In other communication system, the core network element may be designated with different names.

In some embodiments, the number of downlink spatial-domain transmission filters and/or the number of signals are configured by the core network element. In other words, the core network element configures not only the correspondence but also the number of downlink spatial-domain transmission filters and/or the number of reference signals.

In some embodiments, the number of downlink spatial-domain transmission filters and/or the number of reference signals are configured by the access network device. In this case, before the core network element configures the correspondence, the access network device indicates the number of downlink spatial-domain transmission filters and/or the number of reference signals to the core network element.

In some embodiments, the number of downlink spatial-domain transmission filters and/or the number of reference signals are configured by the IRS. In this case, before the core network element configures the correspondence, the IRS directly indicates the number of downlink spatial-domain transmission filters and/or the number of reference signals to the core network element. Alternatively, the IRS transmits the number of downlink spatial-domain transmission filters and/or the number of reference signals to the access network device, and then the access network device indicates the number of downlink spatial-domain transmission filters and/or the number of reference signals to the core network element.

In some embodiments, the core network element directly transmits the second information to at least one of: an access network device, an intelligent reflection surface, and a terminal device.

In some embodiments, the core network element transmits the second information to the terminal device via forwarding by the intelligent reflection surface.

In some embodiments, the core network element transmits the second information to the access network device, and the access network device transmits the second information to the IRS and/or terminal device in a case where the access network device receives the second information from the core network element.

In some embodiments, the network device indicates the number of downlink spatial-domain transmission filters and/or the number of reference signals to the IRS. The information indicating the number of downlink spatial-domain transmission filters and/or the number of reference signals may be included in the second information transmitted by the network device to the IRS. Alternatively, the information indicating the number of downlink spatial-domain transmission filters and/or the number of reference signals may be separately transmitted by the network device to the IRS. The phrase "separately transmit" means that the number of downlink spatial-domain transmission filters and/or the number of reference signals may be not included in the second information.

In some embodiments, the network device does not indicate to the IRS the number of downlink spatial-domain transmission filters. The IRS determines the number of downlink spatial-domain transmission filters based on the correspondence indicated in the second information.

2. The correspondence is determined by the IRS.

In some embodiments, the number of downlink spatial-domain transmission filters and/or the number of reference signals are configured by the IRS. In other words, the IRS configures not only the correspondence, but also the number of downlink spatial-domain transmission filters and/or the number of reference signals.

In some embodiments, the number of downlink spatial-domain transmission filters and/or the number of reference signals are determined by an access network device. In this case, before the IRS configures the correspondence, the core network element indicates the number of downlink spatial-domain transmission filters and/or the number of reference signals to the access network device.

In some embodiments, the number of downlink spatial-domain transmission filters and/or the number of reference signals are determined by a core network element. In this case, before the IRS configures the correspondence, the core network element indicates the number of downlink spatial-domain transmission filters and/or the number of reference signals to the IRS. Alternatively, the core network element indicates the number of downlink spatial-domain transmission filters and/or the number of reference signals to the access network device, and then the access network device indicates the number of downlink spatial-domain transmission filters and/or the number of reference signals to the IRS.

When the correspondence is determined by the IRS, in some embodiments, the IRS transmits the second information upon completion of the configuration of the correspondence. Correspondingly, the access network device and/or the terminal device receive the second information.

In some embodiments, the IRS directly transmits the second information to the access network device and/or the terminal device.

In some embodiments, the IRS transmits the second information to the access network device, and then the access network device transmits the second information to the terminal device.

In the embodiment of the present disclosure, the IRS is used to reflect the plurality of reference signals to the terminal device using the respective downlink spatial-domain transmission filters based on the correspondence, and then the process allows the IRS to perform matching for the downlink spatial-domain transmission filters between the terminal device. For the specific method for matching spatial-domain transmission filters, reference may be made to the embodiments above, which is not elaborated herein.

Additionally, it should be noted that the unique identification information of the plurality of reference signals may be configured together with the number of downlink spatial-domain transmission filters and/or the number of reference signals, or the unique identification information of the plurality of reference signals may be configured together with the correspondences, or the unique identification information of the plurality of reference signals may be separately configured in a case where the number of downlink spatial-domain transmission filters and/or the number of reference signals are determined, which is not limited in the present disclosure.

The following describes an exemplary embodiment of a method for matching spatial-domain transmission filters provided by this disclosure, using reference signal CSI-RS as an example. Similarly, this solution only includes one or several parallel schemes involved in this disclosure. The specific steps of the method are as follows:

First, an IRS indicates the number of CSI-RSs to the network device, and the network device informs second information and the CSI-RS ID corresponding to each different CSI-RS based on the number of CSI-RSs received. Alternatively, the network device directly informs second information and the CSI-RS ID corresponding to each different CSI-RS based on the number of preconfigured CSI-RSs.

Then, the IRS reflects, using different downlink spatial-domain transmission filters, CSI-RS with different IDs and different directions to the terminal device at different time-domain locations.

In some embodiments, the IRS reflects, using different downlink spatial-domain transmission filters, CSI-RS with different IDs and different directions to the terminal device at different time-domain locations based on third indication information transmitted by the network device.

Then, the terminal device measures the CSI-RS with different IDs based on first indication information (e.g., NZP CSI-RS-Resource Set) transmitted by the network, and the terminal device acquires the CSI-RS with an optimal measured received signal quality as the first reference signal.

Then, the terminal device transmits first information (e.g., the CSI-RS ID corresponding to the first reference signal) to the network device or the IRS to report the CSI-RS with the optimal measured received signal quality.

Then, the IRS reflects repetitions of the reported CSI-RS to the terminal device at different time-domain locations using a first downlink spatial-domain transmission filter.

In some embodiments, the IRS reflects, using a first downlink spatial-domain transmission filter, the repetitions of the reported CSI-RS to the terminal device at different time-domain locations based on the third indication information transmitted by the network device.

Finally, the terminal device autonomously performs the downlink spatial-domain transmission filter scanning based on the second indication information transmitted by the network device. The terminal device selects a first uplink spatial-domain transmission filter matching the first downlink spatial-domain transmission filter, thereby completing the matching between an uplink spatial-domain transmission filter and a downlink spatial-domain transmission filter.

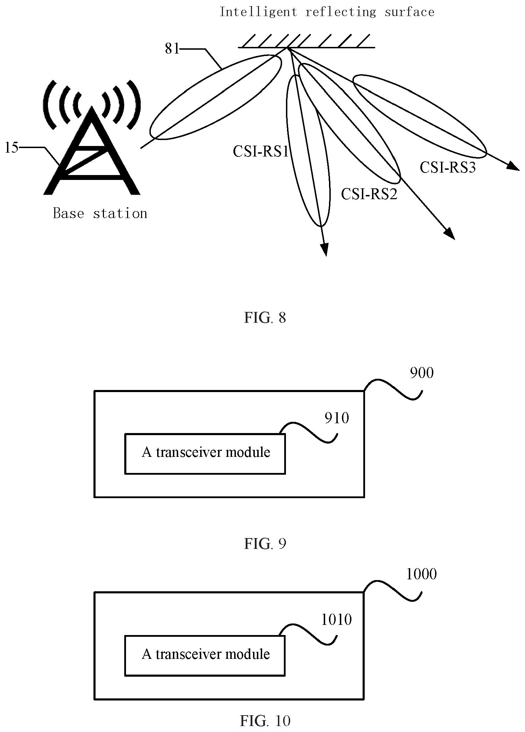

In summary, as illustrated in FIG. 8, before the IRS reflects CSI-RS with different IDs and different directions to the terminal device at different time-domain locations to the terminal device, the network device transmits information 81 to the IRS, and the information 81 may include one or more of the following: an initial CSI-RS requiring processing or reflection by the IRS, a second information, a information for indicating a number of downlink spatial-domain transmission filters and/or a number of reference signals, the CSI-RS ID information, and a third indication information.

It should be noted that in the embodiments of the aforementioned methods, the steps performed by a terminal device may be independently implemented as a method for matching spatial-domain transmission filters on the terminal device; the steps performed by an IRS may be independently implemented as a method for matching spatial-domain transmission filters on the IRS; and the steps performed by a network device may be independently implemented as a method for matching spatial-domain transmission filters on the network device. For details not disclosed in any of these embodiments, reference may be made to the embodiments hereinafter.

The following are the device embodiments of the present disclosure. For details not described in detail in the device embodiments, reference may be made to the corresponding descriptions in the above method embodiments.

FIG. 9 illustrates a block diagram of an apparatus for matching spatial-domain transmission filters according to some embodiments of the present disclosure. The apparatus has the function of realizing the above method for matching spatial-domain transmission filters. The functions may be implemented by hardware or by running the corresponding software on hardware. The device may be the terminal device previously described or integrated within the terminal device. As illustrated in FIG. 9, the apparatus 900 may include: a transceiver module 910.

The transceiver module 910 is configured to receive a plurality of reference signals from an IRS, wherein the plurality of reference signals are reflected using respective corresponding downlink spatial-domain transmission filters.

The transceiver module 910 is configured to transmit first information, wherein the first information is used to indicate a first reference signal of the plurality of reference signals.

In some embodiments, the first reference signal is a reference signal with an optimal measured received signal quality of the plurality of reference signals acquired by the terminal device.

In some embodiments, the reception signal quality comprises at least one of: an SNR; an SINR; an RSRQ; a signal energy, an RSRP; or an RSSI.

In some embodiments, each of the plurality of reference signals is associated with unique identification information, wherein the first information comprises identification information of the first reference signal.

In some embodiments, the transceiver module 910 is configured to transmit the first information to a network device; or the transceiver module 910 is configured to transmit the first information to the IRS.

In some embodiments, the transceiver module 910 is configured to receive first indication information, wherein the first indication information is used to instruct the IRS to reflect the plurality of reference signals in the form of a non-repeating spatial-domain transmission filter.

In some embodiments, the transceiver module 910 is configured to receive the first reference signal from the IRS using a first downlink spatial-domain transmission filter, wherein the first downlink spatial-domain transmission filter is the downlink spatial-domain transmission filter corresponding to the first reference signal. The transceiver module 910 is further configured to determine a first uplink spatial-domain transmission filter matching the first downlink spatial-domain transmission filter.

In some embodiments, the transceiver module 910 is configured to receive second indication information, wherein the second indication information is used to instruct the IRS to reflect a first reference signal spatial-domain transmission filter in the form of a repeating spatial-domain transmission filter.

In some embodiments, a correspondence between the downlink spatial-domain transmission filter and the reference signal is determined by the network device and indicated to the IRS.

In some embodiments, the correspondence between the downlink spatial-domain transmission filter and the reference signal is determined by the IRS.

In some embodiments, the number of downlink spatial-domain transmission filters and/or the number of reference signals are configured by the network device, or are configured by the IRS, or are preconfigured.

FIG. 10 illustrates a block diagram of an apparatus for matching spatial-domain transmission filters according to some embodiments of the present disclosure. The apparatus has the function of performing the method for matching spatial-domain transmission filters. The functions may be implemented by hardware or by running the corresponding software on hardware. The device may be an IRS previously described or integrated within the IRS. As illustrated in FIG. 10, an apparatus 1000 may include: a transceiver module 1010.

The transceiver module 1010 is configured to reflect a plurality of reference signals to a terminal device, wherein the plurality of reference signals are reflected using respective corresponding downlink spatial-domain transmission filters.

The transceiver module 1010 is configured to determine a first downlink spatial-domain transmission filter adapted to the terminal device based on a first reference signal fed back by the terminal device, wherein the first downlink spatial-domain transmission filter is the downlink spatial-domain transmission filter corresponding to the first reference signal.

In some embodiments, the transceiver module 1010 is configured to receive third indication information, wherein the third indication information is used to instruct the IRS to reflect the plurality of reference signals.

In some embodiments, the transceiver module 1010 is configured to reflect the first reference signal to the terminal device using the first downlink spatial-domain transmission filter, such that the terminal device determines a first uplink spatial-domain transmission filter matching the first downlink spatial-domain transmission filter.

In some embodiments, the transceiver module 1010 is configured to receive fourth indication information, wherein the fourth indication information is used to instruct the IRS to reflect the first reference signal using the first downlink spatial-domain transmission filter.

In some embodiments, the transceiver module 1010 is configured to receive first information, wherein the first information is used to indicate the first reference signal.

In some embodiments, each of the plurality of reference signals is associated with unique identification information, wherein the first information comprises identification information of the first reference signal.

In some embodiments, a correspondence between the downlink spatial-domain transmission filter and the reference signal is determined by a network device. The transceiver module 1010 is configured to receive second information from the network device, wherein the second information is used to indicate the correspondence between the downlink spatial-domain transmission filter and the reference signal.

In some embodiments, the correspondence between the downlink spatial-domain transmission filter and the reference signal are determined by the IRS.

In some embodiments, the number of downlink spatial-domain transmission filters and/or the number of reference signals are configured by the network device, or are configured by the IRS, or are preconfigured.

In some embodiments, the first reference signal is the reference signal with an optimal measured received signal quality of the plurality of reference signals acquired by the terminal device.

In some embodiments, the received signal quality includes at least one of: an SNR; an SINR; an RSRQ; a signal energy, an RSRP; or an RSSI.

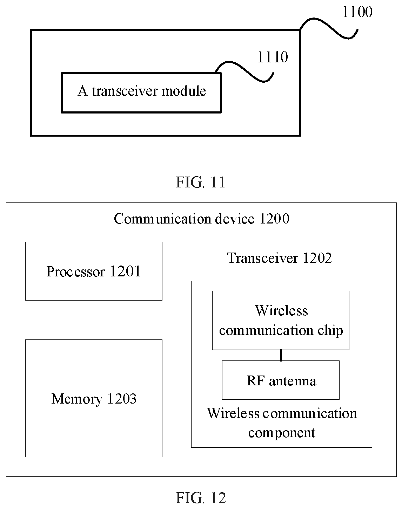

FIG. 11 illustrates a block diagram of an apparatus for matching spatial-domain transmission filters according to some embodiments of the present disclosure. The apparatus has the function of performing the method for matching spatial-domain transmission filters. The functions may be implemented by hardware or by running the corresponding software on hardware. The device may be a network device previously described or integrated within the network device. As illustrated in FIG. 11, an apparatus 1100 may include: a transceiver module 1110.

The transceiver module 1110 is configured to transmit third indication information, wherein the third indication information is used to indicate the IRS to transmit the plurality of reference signals; and the plurality of reference signals are transmitted using respective corresponding downlink spatial-domain transmission filters.

In some embodiments, the transceiver module 1110 is configured to transmit first indication information, wherein the first indication information is used to instruct the IRS to reflect the plurality of reference signals in a non-repeating form.

In some embodiments, the transceiver module 1110 is configured to receive first information, wherein the first information is used to indicate the first reference signal of the plurality of reference signals. The transceiver module 1110 is configured to transmit fourth indication information, wherein the fourth indication information is used to instruct the IRS to reflect the first reference signal using the first downlink spatial-domain transmission filter, and wherein the first downlink spatial-domain transmission filter is the downlink spatial-domain transmission filter corresponding to the first reference signal.

In some embodiments, the transceiver module 1110 is configured to transmit second indication information, wherein the second indication information is used to instruct the IRS to reflect a first reference signal spatial-domain transmission filter in a repeated form.

In some embodiments, the first reference signal is a reference signal with an optimal measured received signal quality of the plurality of reference signals acquired by the terminal device.

In some embodiments, the received signal quality includes at least one of: an SNR; an SINR; an RSRQ; a signal energy, an RSRP; or an RSSI.

In some embodiments, a correspondence between the downlink spatial-domain transmission filter and the reference signal is determined by the network device. The transceiver module 1110 is configured to transmit second information, wherein the second information is used to indicate the correspondence between the downlink spatial-domain transmission filter and the reference signal.

In some embodiments, the number of downlink spatial-domain transmission filters and/or the number of reference signals are configured by the network device, or are configured by the IRS, or are preconfigured.

In some embodiments, the network device is an access network device or a core network element.

It should be noted that the device according to the above embodiments implements its functions by merely illustrating the division of each functional module. In practical applications, the aforementioned functions may be assigned to different functional modules as needed. That is, the device may be divided into different functional modules to implement all or part of the functions as described above.

As for the apparatus in the above embodiments, the specific way in which each module performs the operations has been described in detail in the embodiments of the method, which is not described herein any further. For details not described in the apparatus embodiments, reference may be made to the above method embodiments.

FIG. 12 illustrates a schematic diagram of the structure of a communication device provided in an embodiment of the present application. The communication device may be a terminal device mentioned above, an IRS mentioned above, or the network device mentioned above. A communication device 1200 may include a processor 1201, a transceiver 1202, and a memory 1203. The transceiver 1202 performs functions of the above transceiver module. The processor 1201 may be used to perform other processing function or control transmitting and/or receiving.

The processor 1201 includes one or more processing cores, and the processor 1201 performs various functional applications and information processing by running software programs and modules.

The transceiver 1202 may include a receiver and a transmitter. For example, the receiver and transmitter may be implemented as a single wireless communication component. The single wireless communication component may include a wireless communication chip and a RF antenna.

The memory 1203 may be connected to the processor 1201 and the transceiver 1202.

The memory 1203 is used to store one or more computer programs run by a processor, and processor 1201 is used to run the one or more computer program to implement various steps of the above method embodiments.

In some embodiments, in a case where the communication device is a terminal device, the transceiver 1202 is configured to receive a plurality of reference signals from an IRS. The plurality of reference signals are transmitted using respective corresponding downlink spatial-domain transmission filters. The transceiver further transmits first information, wherein the first information is used to indicate a first reference signal of the plurality of reference signals.

In some embodiments, in a case where the communication device is an IRS, the transceiver 1202 is configured to reflect a plurality of reference signals to a terminal device, wherein the plurality of reference signals are transmitted by respective corresponding downlink spatial-domain transmission filters. The transceiver module 1202 is further configured to determine a first downlink spatial-domain transmission filter adapted to the terminal device based on a first reference signal fed back by the terminal device, wherein the first downlink spatial-domain transmission filter is the downlink spatial-domain transmission filter corresponding to the first reference signal.

In some embodiments, in a case where the communication device is a network device, the transceiver 1202 is configured to transmit third indication information, wherein the third indication information is used to instruct the IRS to reflect the plurality of reference signals; and the plurality of reference signals are reflected using respective corresponding downlink spatial-domain transmission filters.

For the details not detailed in this embodiment, reference may be made to the embodiments above, which are not elaborated herein.

Furthermore, the memory may be implemented using any type of volatile or non-volatile storage devices or combinations thereof. Volatile or non-volatile storage devices include, but are not limited to: magnetic disks or optical disks, electrically erasable programmable read-only memory, erasable programmable read-only memory, static random access memory, read-only memory, magnetic memory, flash memory, and programmable read-only memory.

Some embodiments of the present disclosure further provide a computer-readable storage medium, storing one or more executable instructions, the one or more executable instructions, when loaded and executed by a processor, cause the processor to perform the method for matching spatial-domain transmission filters on a terminal device, or the method for matching spatial-domain transmission filters on an IRS, or the method for matching spatial-domain transmission filters on a network device. In some embodiments, the computer-readable storage medium may include: a read-only memory, a random-access memory, a solid state drive or an optical disc. The random-access memory may include: a resistance random access memory and a dynamic random access memory.

Some embodiments of the present disclosure further provide a chip, the chip includes programmable logical circuitry or one or more programs. The chip, when running, causes the chip to perform the method for matching spatial-domain transmission filters on a terminal device, or the method for matching spatial-domain transmission filters on an IRS, or the method for matching spatial-domain transmission filters on a network device.

Some embodiments of the present disclosure further provide a computer program product or computer program, a computer program product or computer program includes one or more computer instructions stored in a computer-readable storage medium, wherein the one or more computer instructions, when loaded and executed by a processor, cause the processor to perform the method for matching spatial-domain transmission filters on a terminal device, or the method for matching spatial-domain transmission filters on an IRS, or the method for matching spatial-domain transmission filters on a network device.

It is to be understood that "indication" mentioned in the embodiments of the present disclosure may be a direct indication, an indirect indication, or an indication that an association relationship is present. For example, "A indicates B" may mean that A directly indicates B, for example, B may be obtained from A; or may mean that A indirectly indicates B, for example, A indicates C via which B may be obtained; or may mean an association relationship is present between A and B.

In the description of the embodiments of the present disclosure, the term "corresponding" indicates a direct or indirect correspondence between two items, or an association relationship between the two items, or a relationship such as indicating and being indicated, configuring and being configured, or the like.

In some embodiments of the present disclosure, the term "predefinition" may be implemented by pre-storing a corresponding code, a corresponding table, or another method that may be used to indicate relevant information in a device (such as a terminal device and a network device), and the specific implementation thereof is not limited in the present disclosure. For example, the term "predefined" may be "defined" in a protocol.

In some embodiments of the present disclosure, the term "protocol" may be a standard protocol in the field of communication, and for example, may include an LTE protocol, an NR protocol, and a related protocol applicable to a future communication system, which is not limited in the present disclosure.

The expression "a plurality of" herein refers to two or more. The term "and/or" herein describes an association relationship between associated objects, indicating three types of relationships. For example, the phrase "A and/or B" means (A), (B), or (A and B). The character "/" herein generally represents an "or" relationship between the associated objects.

The expression "greater than or equal to" herein means greater than or equal to or just greater than, and the expression "less than or equal to" herein means less than or equal to or just less than.

In addition, the serial numbers of the processes described herein only exemplifies one possible execution sequence among the processes. In some embodiments, the processes may also be executed without following the numbered order. For example, two processes with different numbers are executed simultaneously or in an order reverse to the order illustrated in the figures, which is not limited in the embodiments of the present disclosure.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent replacements, improvements, and the like made within the spirit and principle of the present disclosure shall fall within the protection scope of the present disclosure.

## Claims

1. A method for matching spatial-domain transmission filters, performed by a terminal device, the method comprising:
receiving a plurality of reference signals from an intelligent reflecting surface, wherein the plurality of reference signals are reflected using respective corresponding downlink spatial-domain transmission filters; and
transmitting first information, wherein the first information is used to indicate a first reference signal of the plurality of reference signals.

2. The method according to claim 1, wherein
the first reference signal is a reference signal with an optimal measured received signal quality of the plurality of reference signals acquired by the terminal device.

3. The method according to claim 2, wherein
the received signal quality comprises at least one of: a signal-to-noise ratio (SNR); a signal-to-interference-plus-noise ratio (SINR); a reference signal received quality (RSRQ); a signal energy, a reference signal received power (RSRP); or a received signal strength indicator (RSSI).

4. The method according to any one of claims 1 to 3, wherein
each of the plurality of reference signals is associated with unique identification information, wherein the first information comprises identification information of the first reference signal.

5. The method according to any one of claims 1 to 4, wherein transmitting the first information comprises:
transmitting the first information to a network device; or
transmitting the first information to the intelligent reflecting surface.

6. The method according to any one of claims 1 to 5, further comprising:
receiving first indication information, wherein the first indication information is used to instruct the intelligent reflecting surface to reflect the plurality of reference signals in the form of a non-repeating spatial-domain transmission filter.

7. The method according to any one of claims 1 to 6, further comprising:
receiving the first reference signal from the intelligent reflecting surface using a first downlink spatial-domain transmission filter, wherein the first downlink spatial-domain transmission filter is the downlink spatial-domain transmission filter corresponding to the first reference signal;
determining a first uplink spatial-domain transmission filter matching the first downlink spatial-domain transmission filter.

8. The method according to any one of claims 1 to 7, further comprising:
receiving second indication information, wherein the second indication information is used to instruct the intelligent reflecting surface to reflect a first reference signal spatial-domain transmission filter in the form of a repeating spatial-domain transmission filter.

9. The method according to any one of claims 1 to 8, wherein
a correspondence between the downlink spatial-domain transmission filter and the reference signal is determined by the network device and indicated to the intelligent reflecting surface.

10. The method according to any one of claims 1 to 9, wherein
the correspondence between the downlink spatial-domain transmission filter and the reference signal is determined by the intelligent reflecting surface.

11. The method according to any one of claims 1 to 10, wherein
a number of the downlink spatial-domain transmission filters and/or a number of the reference signals are configured by the network device, or are configured by the intelligent reflecting surface, or are preconfigured.

12. A method for matching spatial-domain transmission filters, performed by an intelligent reflecting surface, the method comprising:
reflecting a plurality of reference signals to a terminal device, wherein the plurality of reference signals are reflected using respective corresponding downlink spatial-domain transmission filters;
determining a first downlink spatial-domain transmission filter adapted to the terminal device based on a first reference signal fed back by the terminal device, wherein the first downlink spatial-domain transmission filter is the downlink spatial-domain transmission filter corresponding to the first reference signal.

13. The method according to claim 12, further comprising:
receiving third indication information, wherein the third indication information is used to instruct the intelligent reflecting surface to reflect the plurality of reference signals.

14. The method according to claim 12 or 13, further comprising:
reflecting the first reference signal to the terminal device using the first downlink spatial-domain transmission filter, such that the terminal device determines a first uplink spatial-domain transmission filter matching the first downlink spatial-domain transmission filter.

15. The method according to any one of claims 12 to 14, further comprising:
receiving fourth indication information, wherein the fourth indication information is used to instruct the intelligent reflecting surface to reflect the first reference signal using the first downlink spatial-domain transmission filter.

16. The method according to any one of claims 12 to 15, further comprising:
receiving first information, wherein the first information is used to indicate the first reference signal.

17. The method according to claim 16, wherein
each of the plurality of reference signals are associated with unique identification information, wherein the first information comprises identification information of the first reference signal.

18. The method according to any one of claims 12 to 17, wherein
a correspondence between the downlink spatial-domain transmission filter and the reference signal is determined by a network device; and the method further comprises:
receiving second information from the network device, wherein the second information is used to indicate the correspondence between the downlink spatial-domain transmission filter and the reference signal.

19. The method according to any one of claims 12 to 18, wherein
the correspondence between the downlink spatial-domain transmission filter and the reference signal is determined by the intelligent reflecting surface.

20. The method according to any one of claims 12 to 19, wherein
a number of the downlink spatial-domain transmission filters and/or a number of the reference signals are configured by the network device, or are configured by the intelligent reflecting surface, or are preconfigured.

21. The method according to any one of claims 12 to 20, wherein
the first reference signal is the reference signal with an optimal measured received signal quality of the plurality of reference signals acquired by the terminal device.

22. The method according to claim 21, wherein
the received signal quality comprises at least one of: a signal-to-noise ratio (SNR); a signal-to-interference-plus-noise ratio (SINR); a reference signal received quality (RSRQ); a signal energy, a reference signal received power (RSRP); or a received signal strength indicator (RSSI).

23. A method for matching spatial-domain transmission filters, performed by a network device, comprising:
transmitting third indication information, wherein the third indication information is used to instruct an intelligent reflecting surface to reflect a plurality of reference signals; and
the plurality of reference signals are reflected using respective corresponding downlink spatial-domain transmission filters.

24. The method according to claim 23, further comprising:
transmitting first indication information, wherein the first indication information is used to instruct the intelligent reflecting surface to reflect the plurality of reference signals in a non-repeating form.

25. The method according to claim 23 or 24, further comprising:
receiving first information, wherein the first information is used to indicate the first reference signal of the plurality of reference signals;
transmitting fourth indication information, wherein the fourth indication information is used to instruct the intelligent reflecting surface to reflect the first reference signal using the first downlink spatial-domain transmission filter, and
wherein the first downlink spatial-domain transmission filter is the downlink spatial-domain transmission filter corresponding to the first reference signal.

26. The method according to claim 25, further comprising:
transmitting second indication information, wherein the second indication information is used to instruct the intelligent reflecting surface to reflect a first reference signal spatial-domain transmission filter in a repeated form.

27. The method according to claim 25 or 26, wherein
the first reference signal is a reference signal with an optimal measured received signal quality of the plurality of reference signals acquired by the terminal device.

28. The method according to claim 27, wherein
the received signal quality comprises at least one of: a signal-to-noise ratio (SNR); a signal-to-interference-plus-noise ratio (SINR); a reference signal received quality (RSRQ); a signal energy, a reference signal received power (RSRP); or a received signal strength indicator (RSSI).

29. The method according to any one of claims 23 to 28, wherein
a correspondence between the downlink spatial-domain transmission filter and the reference signal is determined by the network device; and the method further comprises:
transmitting second information, wherein the second information is used to indicate the correspondence between the downlink spatial-domain transmission filter and the reference signal.

30. The method according to any one of claims 23 to 29, wherein
a number of the downlink spatial-domain transmission filters and/or a number of the reference signals are configured by the network device, or are configured by the intelligent reflecting surface, or are preconfigured.

31. The method according to any one of claims 23 to 30, wherein the network device is an access network device or a core network element.

32. An apparatus for matching spatial-domain transmission filters, arranged in a terminal device, comprising:
a transceiver module, configured to receive a plurality of reference signals from an intelligent reflecting surface, wherein the plurality of reference signals are reflected using respective corresponding downlink spatial-domain transmission filters;
wherein the transceiver module is further configured to transmit first information, wherein the first information is used to indicate a first reference signal of the plurality of reference signals.

33. An apparatus for matching spatial-domain transmission filters, arranged in an intelligent reflecting surface, comprising:
a transceiver module, configured to reflect a plurality of reference signals to a terminal device, wherein the plurality of reference signals are reflected using respective corresponding downlink spatial-domain transmission filters;
wherein the transceiver module is further configured to determine a first downlink spatial-domain transmission filter adapted to the terminal device based on a first reference signal fed back by the terminal device, wherein the first downlink spatial-domain transmission filter is the downlink spatial-domain transmission filter corresponding to the first reference signal.

34. An apparatus for matching spatial-domain transmission filters, arranged in a network device, comprising:
a transceiver module, configured to transmit third indication information, wherein the third indication information is used to instruct the intelligent reflecting surface to reflect the plurality of reference signals; and the plurality of reference signals are reflected using respective corresponding downlink spatial-domain transmission filters.

35. A communication device, comprising: a processor and a memory storing one or more executable instructions; wherein the processor executes the one or more executable instructions, is caused to perform the method for matching spatial-domain transmission filters as defined in any one of claims 1 to 11, or the method for matching spatial-domain transmission filters as defined in any one of claims 12 to 22, or the method for matching spatial-domain transmission filters as defined in any one of claims 23 to 31.

36. A computer-readable storage medium, storing one or more executable instructions, wherein the one or more executable instructions, when loaded and executed by a processor, cause the processor to perform the method for matching spatial-domain transmission filters as defined in any one of claims 1 to 11, or the method for matching spatial-domain transmission filters as defined in any one of claims 12 to 22, or the method for matching spatial-domain transmission filters as defined in any one of claims 23 to 31.

37. A chip, comprising: programmable logical circuitry or one or more programs, wherein the chip, when running, causes the chip to perform the method for matching spatial-domain transmission filters as defined in any one of claims 1 to 11, or the method for matching spatial-domain transmission filters as defined in any one of claims 12 to 22, or the method for matching spatial-domain transmission filters as defined in any one of claims 23 to 31.

38. A computer program product, comprising: one or more computer instructions stored in a computer-readable storage medium, wherein the one or more computer instructions, when loaded and executed by a processor, cause the processor to perform the method for matching spatial-domain transmission filters as defined in any one of claims 1 to 11, or the method for matching spatial-domain transmission filters as defined in any one of claims 12 to 22, or the method for matching spatial-domain transmission filters as defined in any one of claims 23 to 31.
